# FASCICULE DE BREVET EUROPEEN

(11) **EP 0 749 195 B1**
(45) Date de publication et mention de la délivrance du brevet: **11.08.1999**
(21) Numéro de dépôt: 96440049.3
(22) Date de dépôt: 13.06.1996
(51) Int. Cl.: H02K 3/50, H02K 3/52

(54) **Moteur à courant alternatif et son procédé d'assemblage et de test**
Wechselstrommotor und Verfahren für seinen Zusammenbau und Überprüfung
Alternating current motor and method of its assembly and testing

(30) Priorité: 14.06.1995 FR 9507260
(43) Date de publication de la demande: 18.12.1996
(73) Titulaire: ALIADE, 68300 Saint-Louis (FR)
(72) Inventeur: Plumer, Louis, 90000 Belfort (FR); Wuarchex, Alain, 68260 Kingersheim (FR)
(74) Mandataire: Rhein, Alain

(56) Documents cités:
- DE-A- 3 144 110
- DE-A- 4 037 753
- GB-A- 1 195 398
- US-A- 4 181 393
- US-A- 4 321 497

## Description

L'invention a trait à un moteur à courant alternatif monophasé ou polyphasé conforme au préambule de la revendication 1.

La présente invention trouvera son application dans le domaine des moteurs électriques à courant alternatif en général. Toutefois, on notera son intérêt tout particulier pour les moteurs de petite dimension tels que les moteurs tubulaires destinés à l'entraînement de volets roulants, stores ou analogues.

Un moteur électrique à courant alternatif comporte un rotor monté en rotation dans un stator lequel peut être traversé par un ou plusieurs bobinages de fils de cuivre émaillés. Tout particulièrement, dans le cadre d'un moteur de type réversible, asynchrone monophasé, il comporte un bobinage principal et un bobinage auxiliaire, tandis que dans le cadre d'un moteur triphasé, celui-ci comporte trois bobinages de phases branchés selon un schéma d'alimentation approprié.

Quoi qu'il en soit, après l'enroulement des fils constituant ces bobinages, ceux-ci sont engagés dans des encoches ménagées au niveau de la paroi interne du stator et dans lesquelles sont insérées, en outre, des gaines isolantes.

Les fils de ces bobinages définissent, aux extrémités du stator, des chignons que l'on vient, éventuellement, préformer, manuellement, avant de les recouvrir par un ruban adhésif de manière à maintenir convenablement rassemblés tous les fils.

Il convient de noter qu'après montage des bobines dans le stator, elles sont raccordées les unes aux autres de manière adéquate.

Le stator subit, alors, une opération de cuisson ayant pour fonction de provoquer la polymérisation du matériau isolant protégeant les fils des bobinages.

Sur le fil destiné à relier les bobinages au réseau d'alimentation électrique est montée, en série, une sécurité thermique laquelle se présente sous forme d'une pastille à deux pôles maintenue en contact avec un chignon à l'une des extrémités du stator. Cette sécurité thermique a pour fonction, ultérieurement, en cas d'élévation de la température, de couper l'alimentation du moteur. Cette sécurité thermique est, là encore, maintenue en position au moyen d'un ruban adhésif.

Ce n'est qu'à ce stade où l'ensemble est totalement figé que l'on va tester le stator, c'est-à-dire que l'on va vérifier l'isolement électrique des bobinages. A ce propos, il est impossible, dans ces conditions, de tester, individuellement, chacun des éléments du moteur, c'est-à-dire l'isolement électrique des bobinages entre eux ou encore par rapport à la sécurité thermique. Tout particulièrement, l'on ne peut vérifier s'il y a un défaut d'isolement au niveau du fil correspondant à une bobine, ceci par rapport à la masse ou l'autre bobinage, ou encore entre spires d'une même bobine. A ce propos, si des spires d'un bobinage sont en court-circuit, il se produit une variation non souhaitée sur le plan du déphasage entre le courant et la tension en cours de fonctionnement du moteur.

Quoi qu'il en soit, en s'abstenant de procéder à ces contrôles, l'on ne peut aboutir à un résultat parfait puisque l'on disposera, forcément, en fin de chaînes de fabrication, de moteurs à fonctionnement défaillant.

On observera qu'il est également connu par le document DE-A-40 37 753 une machine électrique, plus particulièrement le stator d'un moteur, comportant un empilage de tôles comprenant un alésage central, ainsi que des encoches traversées par les fils des bobinages. De part et d'autre du paquet de tôles est appliquée une plaque d'extrémité en matière isolante contre laquelle sont maintenus en applique les chignons définis par ces bobinages. L'une de ces plaques d'extrémité reçoit des connecteurs auxquels sont raccordées chacune des extrémités des bobinages ainsi que les bornes de la sécurité thermique. L'un de ces connecteurs, du type femelle, accueille une prise de type mâle d'un faisceau de raccordement assurant la liaison du moteur au réseau d'alimentation en énergie électrique. L'autre connecteur, également du type femelle, reçoit une broche de raccordement reliant l'une des extrémités des bobinages à l'une des bornes de la sécurité thermique.

Etant donné qu'à chacune des extrémités des bobinages et qu'à chacune des bornes de la sécurité thermique correspond un connecteur, il est possible, après montage du stator de contrôler individuellement chacun de ces éléments. Toutefois, l'on observera que cette solution n'est applicable qu'aux stators de grande dimension. Ainsi, pour de petits moteurs électriques à courant alternatif monophasé ou polyphasé, la taille des chignons est telle qu'ils recouvrent, en totalité les faces d'extrémités des tôles empilées constituant le stator. Il est d'ailleurs connu de placer sur ces extrémités du stator des coiffes permettant de maîtriser les fils des bobinages de manière à ne pas les endommager, soit lors du positionnement du stator à l'intérieur de son carter, soit au moment d'engager le rotor (voir DE-A-31 44 100). L'on constate, à ce propos, que ces coiffes sont nécessairement mises en place avant ce montage du rotor. Aussi, lorsque ce dernier est effectivement positionné dans le stator se pose le problème de l'accès aux connecteurs pour, soit contrôler les éléments du stator, soit modifier la connection en cas d'erreur.

En fin de compte, les solutions connues ne permettent pas d'envisager le contrôle du fonctionnement d'un moteur en fin d'assemblage, tout en offrant la possibilité d'intervenir sur les connections des bobinages et/ou de la sécurité thermique en cas d'erreur constatée à ce moment là.

L'invention telle que caractérisée dans les revendications résout le problème et consiste en un moteur à courant alternatif monophasé ou polyphasé comprenant un stator dans lequel est monté un rotor et qui est traversé par au moins un bobinage associé à un autre bobinage et/ou à une sécurité thermique, à chacune des extrémités ou bornes du ou des bobinages et/ou de la sécurite thermique étant associé un connecteur, les connecteurs correspondant à l'une des extrémités des bobinages et destinés à être connectés au commun d'un réseau d'alimentation en énergie électrique, étant aptes à recevoir un connecteur de raccordement, soit au commun du réseau soit à l'une des bornes de la sécurité thermique lesdits connecteurs étant associés à une coiffe servant de protection à l'un des chignons définis par le ou les bobinages aux extrémités du stator.

Avantageusement, ladite coiffe comporte un boîtier pour le logement de la sécurité thermique.

Finalement, l'invention concerne un procédé d'assemblage et de test d'un moteur conforme à l'invention caractérisé par le fait qu'après enroulement du ou des bobinages et leur introduction dans le stator :
- on raccorde les extrémités de ce ou ces bobinages aux connecteurs respectifs d'une coiffe prééquipée d'une sécurité thermique elle-même raccordée à des connecteurs au niveau de ladite coiffe ;
- on positionne celle-ci sur le chignon correspondant, défini par le ou les bobinages à l'une des extrémités du stator ;
- on positionne une coiffe sur le chignon à l'autre extrémité du stator
- on teste, individuellement, chaque bobinage et la sécurité thermique.

Les avantages découlant de la présente invention consistent en ce que le stator peut être testé dans toutes ses caractéristiques. Notamment, l'on peut vérifier l'isolement électrique des différents éléments par rapport à la masse, mais aussi entre eux. De même, par une mesure du diélectrique correspondant à chaque bobinage, l'on peut s'assurer que les spires qui le composent ne sont pas en court-circuit ou encore qu'il n'y a aucun défaut d'isolement du fil. A ce propos, en offrant, ainsi, la possibilité de tester dans leurs moindres caractéristiques, chacun des bobinages d'un moteur, l'on peut envisager d'optimiser l'épaisseur d'émail enrobant un fil en vue de l'isoler. Il en résulte, inévitablement, un coût de revient moindre de ces moteurs, dans la mesure où n'étant pas à même de procéder aux vérifications qui, pourtant, s'imposaient, les fabricants se devaient de retenir des épaisseurs d'émail plus importantes que nécessaire pour tenter de prévenir les risques incontrôlables auxquels ils étaient exposés.

En outre, conformément au procédé de montage et de test, l'on observe que la cuisson du stator ne peut être effectuée qu'après le montage quasi total du moteur et, tout particulièrement, après avoir procédé aux différentes vérifications, de type isolation électrique des bobinages entre eux ou encore par rapport aux éléments extérieurs ce qui permet, en cas de détection d'une défaillance, de remédier, éventuellement, à cette dernière en raison de la non solidification des bobinages. Tout particulièrement en cas d'inversion du branchement des bobinages, l'on peut y apporter une solution aisément.

De plus, en associant les connecteurs à la coiffe, les raccordements électriques du moteur sont, eux aussi, rendus plus aisés. Notamment, lors du montage de ce moteur dans un ensemble donné, son raccordement, par exemple, à une carte d'alimentation extérieure, peut être effectué de manière automatique.

L'invention est exposée plus en détail dans la description qui va suivre se rapportant à un mode de réalisation qui n'est donné qu'à titre d'exemple. La compréhension de cette description sera facilitée en se référant au dessin joint en annexe.
- la figure 1 est une vue schématisée et en coupe partielle d'un moteur conforme à l'invention ;
- la figure 2 est un schéma synoptique d'un moteur asynchrone monophasé à condensateur ;
- la figure 3 est une vue schématisée et en coupe partielle d'un stator dont les chignons définis par les bobinages aux extrémités reçoivent une coiffe comportant des moyens de connexion selon l'invention ;
- la figure 4 est une vue de gauche de la figure 2 sur laquelle est tout particulièrement visible le carter aménagé dans la coiffe pour la réception de la sécurité thermique.

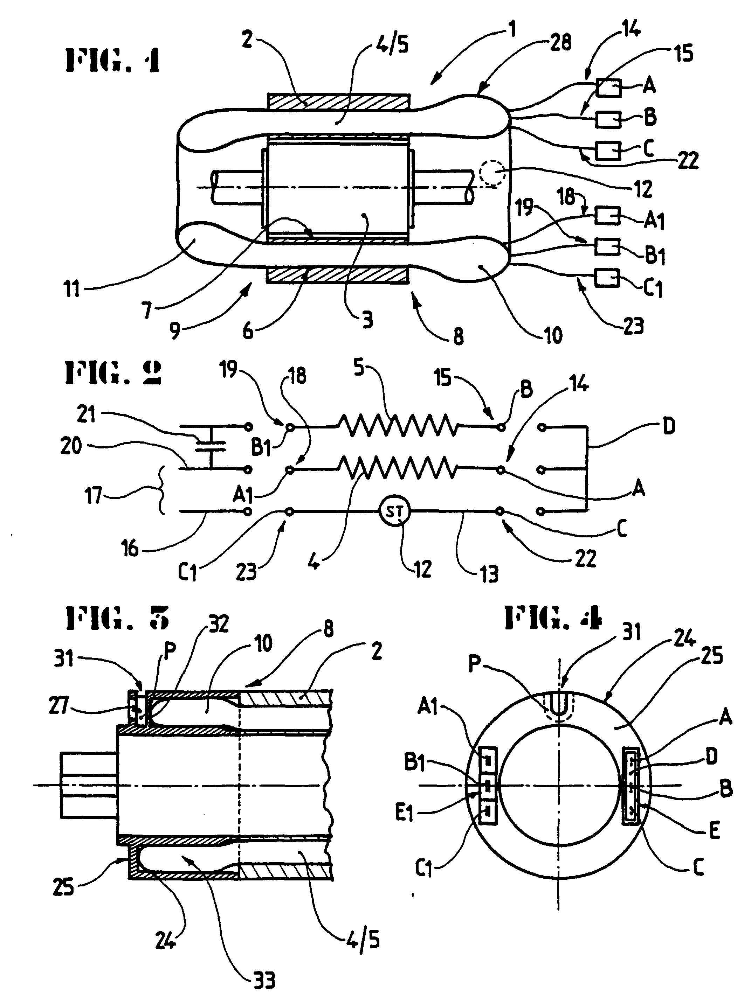

La présente invention concerne un moteur à courant alternatif 1 qui, tel que représenté dans la figure 1, comporte un stator 2 dans lequel est monté un rotor 3. Ce moteur peut être du type monophasé ou encore polyphasé, plus particulièrement triphasé. La figure 2 correspond à une représentation synoptique d'un exemple de moteur concerné. Il s'agit, en fait, d'un moteur asynchrone monophasé à condensateur.

Quoi qu'il en soit, le stator 2, correspondant à de tels moteurs 1, est traversé par un ou plusieurs bobinages 4, 5. Plus particulièrement, après enroulement de ces bobinages au moyen d'un fil isolé, ils sont insérés dans des encoches 6 ménagées au niveau de la paroi interne 7 du stator 2, dans ces encoches 6 étant, préalablement, disposées des gaines isolantes. Par ailleurs, aux extrémités 8, 9 de ce stator 2, le ou les bobinages 4, 5, définissent des chignons 10, 11 au niveau desquels l'on procède à leur raccordement électrique.

A noter, à ce propos que, d'une manière fréquente, un tel moteur 1 reçoit une sécurité thermique 12 disposée à proximité, voire même en contact avec l'un des chignons 10, 11 afin d'en évaluer la température ou, plus précisément, en vue de détecter une élévation anormale de cette température correspondant à une surchauffe du moteur 1 en vue de couper son alimentation en énergie électrique. Tout particulièrement et tel que visible dans la figure 2, la sécurité thermique 12 doit être placée sur le câble d'alimentation 13 reliant le ou les bobinages 4, 5, à leur extrémité 14, 15, au commun 16 du réseau d'alimentation en énergie électrique monophasé ou polyphasé 17. Quant à l'autre extrémité 18, 19 de ce ou ces bobinages 4, 5, elle est reliée de manière appropriée à la ou les phases 20 de ce réseau 17.

Pour en revenir au schéma particulier d'un moteur asynchrone monophasé à condensateur, illustré dans la figure 2, le bobinage 4, correspondant au bobinage principal, est raccordé, en direct, à son extrémité 18, à la phase 20 du réseau 17, tandis que l'extrémité 19 du bobinage secondaire 5 y est reliée au travers d'un condensateur 21. Il est bien évident qu'il s'agit, là, d'un raccordement conforme à un sens de rotation donné. S'agissant d'un moteur réversible, la modification du sens de rotation conduit à une inversion de rôles des bobinages 4, 5.

En fait, chacune des extrémités, respectivement, 14, 18 et 15, 19 des bobinages 4, 5, ou encore des bornes 22, 23 de la sécurité thermique 12 est associé un connecteur A, B, C ; A₁, B₁ , C₁ , permettant un contrôle individuel de l'isolement électrique de chacun de ces bobinages 4, 5 ou encore de la sécurité thermique 12 que ce soit par rapport au stator 2 ou encore les uns par rapport aux autres. En fait, la présente invention est avantageuse en ce qu'elle permet de vérifier si les spires des bobinages 4, 5 sont en court-circuit et même s'il y a un court-circuit ou un défaut d'isolement électrique quelconque entre les spires d'un même bobinage.

En outre, les connecteurs A, B, équipant les extrémités 14, 15 du ou des bobinages 4, 5, sont ainsi prévus qu'ils sont aptes à coopérer avec un connecteur de raccordement D à même de les relier au commun 16 du réseau 17 ou à la borne 22 de la sécurité thermique 12.

Les figures 2 et 3 des dessins ci-joints correspondent à un mode de réalisation particulier de l'invention selon laquelle il est préconisé d'associer les connecteurs A, B, C ; A₁ , B₁ , C₁ , à une coiffe 24 servant de protection au chignon 10 à l'une des extrémités 8 du stator 2. A ce sujet, ces connecteurs A, B, C ; A₁ , B₁ , C₁ sont répartis, préférentiellement, de manière symétrique par rapport à l'axe de la coiffe 24 sur la face avant annulaire 25 de cette dernière.

En outre, les connecteurs A₁, B₁, C₁ destinés à être reliés directement ou indirectement (par l'intermédiaire d'un condensateur 21) au réseau 17 sont regroupés en un connecteur multibroches E₁. Le connecteur multibroche E, regroupe les connecteurs A, B, C et reçoit le connecteur de raccordement D.

Les avantages découlant d'une telle configuration consistent en ce que le raccordement électrique d'un moteur 1, conforme à l'invention, est considérablement facilité, sans compter que, grâce à la protection du chignon 10 au moyen de la coiffe 24 et pour peu que l'autre chignon 11 soit lui-même recouvert d'une coiffe appropriée, l'on peut envisager de monter dans le stator 2 le rotor 3 en vue de procéder, sur un même banc d'essai, d'une part, au test de chaque bobinage 4, 5, individuellement et de la sécurité thermique 12 et, d'autre part, du fonctionnement du moteur 1 avant même que le stator 2 n'ait subi l'opération de cuisson provoquant la polymérisation du matériau isolant correspondant à l'émail protégeant le fil du ou des bobinages 4, 5 de manière à solidifier l'ensemble. Cette cuisson peut, d'ailleurs, être effectuée sur ce même banc d'essai, l'élévation de la température étant obtenue par l'alimentation des bobinages 4, 5, en un courant adéquat.

Cette manière de procéder est tout particulièrement avantageuse dans la mesure où l'on peut intervenir, encore, sur ce moteur 1 et, tout particulièrement, sur les éléments du stator 2 en cas de défaillance, tout particulièrement, lors d'un mauvais raccordement du ou des bobinages 4, 5, conduisant à un sens de rotation incorrect vérifié lors du test de fonctionnement du moteur.

Selon l'invention il est encore prévu d'associer à l'une des coiffes 24, recouvrant l'un des chignons 10, 11 et, tout particulièrement, la coiffe 24 équipée des connecteurs multibroches, E, E₁, d'un boîtier 27 de logement de la sécurité thermique 12.

A ce propos, celle-ci se trouve, habituellement, dans le commerce sous forme d'une pastille aux bornes de laquelle sont raccordés deux tronçons de câbles électriques dont les extrémités sont équipées, précisément, des connecteurs C, C₁. Ce boîtier 27 est tout particulièrement défini pour accueillir ladite pastille P correspondant à cette sécurité thermique 12. En outre, si ladite pastille P était habituellement apposée, jusqu'alors, sur le pourtour 28 d'un chignon 10, elle se situe, à présent, de manière préférentielle, sur le chant d'extrémité de ce chignon 10. Une disposition selon l'état de la technique conduisait à maintenir la pastille P au contact avec les fils électriques correspondant à un seul bobinage de sorte que sa sensibilité de détection d'un échauffement anormal de l'autre bobinage était particulièrement faible.

Une disposition selon l'invention est en mesure de remédier à cet inconvénient, puisqu'elle permet de maintenir la pastille P au droit des fils électriques correspondant, partiellement, à plusieurs bobinages 4, 5.

Avantageusement, la pastille P est introduite à l'intérieur du boîtier 27 au travers d'une ouverture 31 se situant sur le pourtour externe de la coiffe 24. En outre, la paroi 32, délimitant ce boîtier 27 par rapport au logement annulaire 33 défini par la coiffe 24, est déterminée de faible épaisseur de manière à ne pas perturber la détection thermique par rapport aux bobinages 4, 5.

L'on observe, au vu de la description qui précède en ce qui concerne le capteur thermique 12, que le raccordement de ce dernier aux connecteurs C, C₁ de la coiffe 24 est une opération qui peut être menée de manière totalement indépendante, avant même que l'on envisage de monter cette coiffe 24 sur le chignon 10 et d'y raccorder les bobinages 4, 5.

Pour en revenir au procédé d'assemblage et de test d'un tel moteur conforme à l'invention, il consiste préférentiellement, après enroulement du ou des bobinages 4, 5 et leur introduction dans le stator 2, en ce que :
- on raccorde les extrémités 14, 18 15, 19 de ce ou ces bobinages 4, 5 aux connecteurs respectifs A, A₁ ; B, B₁ d'une coiffe 24 prééquipés d'une sécurité thermique 12 elle-même raccordée à des connecteurs C, C au niveau de ladite coiffe 24 ;
- on positionne celle-ci sur le chignon 10 correspondant, défini par le ou les bobinages 4, 5 à l'une des extrémités 8 du stator 2 ;
- on positionne une coiffe sur le chignon 11 à l'autre extrémité du stator 2 ;
- on teste, individuellement, chaque bobinage 4, 5 et la sécurité thermique 12.

En fait, il est avantageux, avant de mener ces différents tests, d'isolement électriques et autres, de monter en rotation le rotor 3 dans le stator 2 et, d'une façon générale, d'assembler totalement le moteur et ses accessoires par exemple le frein électromagnétique qui lui est associé. Cela permet de mener, ultérieurement, et sur le même banc d'essai, le test du fonctionnement du moteur 1 et, notamment, de vérifier son sens convenable de rotation. L'on peut encore mener les essais de fonctionnement des éléments accessoires. Après connexion des défaillances éventuelles, on procède à la cuisson du stator 2 en soumettant le ou les bobinages 4, 5 à un courant adéquat, préférentiellement, du type continu.

Finalement, l'on constate que la présente invention apporte des solutions non seulement du point de vue de la qualité de contrôles susceptibles d'être effectués sur de tels moteurs à courant alternatif, mais, en outre, au niveau de certaines difficultés de leur montage, de leur assemblage et de leur raccordement électrique. Aussi, la présente invention représente un net progrès technique dans le domaine considéré.

## Revendications

1. Moteur à courant alternatif monophasé ou polyphasé, comprenant un stator (2) dans lequel est monté un rotor (3) et qui est traversé par au moins un bobinage (4) associé à un autre bobinage (5) et/ou à une sécurité thermique (12), à chacune des extrémités ou bornes (14, 18 ; 15, 19 ; 22, 23) du ou des bobinages (4 ; 5) et/ou de la sécurité thermique (12) étant associé un connecteur (A, A₁ ; B, B₁ ; C, C₁), les connecteurs (A ; B), correspondant à l'une (14 ; 15) des extrémités des bobinages (4 ; 5) et destinés à être connectés au commun (16) d'un réseau d'alimentation en énergie électrique (17), étant aptes à recevoir un connecteur de raccordement (D), soit au commun (16) du réseau (17), soit à l'une (22) des de la sécurité thermique (12), caractérisé par le fait que les connecteurs (A, A₁ ; B, B₁ ; C, C₁) sont associés à une coiffe (24) servant de protection à l'un (10) des chignons définis par le ou les bobinages (4, 5) aux extrémités (8, 9) du stator (2).

2. Moteur selon la revendication 1, caractérisé par le fait que la coiffe (24) comporte une face avant annulaire (25) sur laquelle sont répartis les connecteurs (A, A₁ ; B, B₁ ; C, C₁), préférentiellement, de manière symétrique par rapport à l'axe de ladite coiffe (24).

3. Moteur selon l'une quelconque des revendications précédentes, caractérisé par le fait que, d'une part, les connecteurs (A , B , C) destinés à être reliés, directement ou indirectement au réseau (17) sont regroupés en un connecteur multibroches (E₁ ) et, d'autre part, les connecteurs (A, B, C) sont regroupés en un connecteur multibroche (E) à même de recevoir le connecteur de raccordement (D).

4. Moteur selon l'une quelconque des revendications 1 et 2, caractérisé par le fait que la sécurité thermique (12), définie par une pastille (P) aux bornes de laquelle sont raccordés deux tronçons de câbles électriques dont les extrémités sont équipées des connecteurs (C, C₁ ) est logée dans un boîtier (27) aménagé dans l'une des coiffes (24), préférentiellement la coiffe (24) équipée des connecteurs (A, A₁ ; B, B₁ ; C, C₁).

5. Moteur selon la revendication 4, caractérisé par le fait que la pastille (P) correspondant à la sécurité thermique (12) est ainsi logée dans le boîtier (27) défini au niveau de la coiffe (24) de manière à se situer au droit du chant d'extrémité du chignon (10) recouvert par cette coiffe (24).

6. Moteur selon l'une quelconque des revendications 4 et 5, caractérisé par le fait que la pastille (P) est introduite dans le boîtier (27) au travers d'une ouverture (31) se situant sur le pourtour externe de la coiffe (24).

7. Moteur selon l'une quelconque des revendications 4 à 6, caractérisé par le fait que le boîtier (27) comporte une paroi (32) d'épaisseur réduite le séparant du logement annulaire (33) défini par la coiffe (24) en vue de ne pas perturber la détection thermique.

8. Procédé d'assemblage et de test d'un moteur conforme aux revendications 1 à 7, caractérisé par le fait qu'après enroulement du ou des bobinages (4, 5) et leur introduction dans le stator (2) :
- on raccorde les extrémités (14, 18 ; 15, 19) de ce ou ces bobinages (4, 5) aux connecteurs respectifs (A, A₁ ; B, B₁ ) d'une coiffe (24) prééquipés d'une sécurité thermique (12) elle-même raccordée à des connecteurs (C, C₁ ) au niveau de ladite coiffe (24) ;
- on positionne celle-ci sur le chignon (10) correspondant, défini par le ou les bobinages (4, 5) à l'une des extrémités (8) du stator (2) ;
- on positionne une coiffe sur le chignon (11) à l'autre extrémité du stator (2) ;
- on teste, individuellement, chaque bobinage (4, 5) et la sécurité thermique (12) .

9. Procédé d'assemblage et de test selon la revendication 8, caractérisé par le fait que, préalablement, aux opérations de test :
- on monte notamment le rotor (3) en rotation dans le stator (2) ;
- ce n'est qu'à ce moment là que l'on procède auxdits tests des bobinages (4, 5) et de la sécurité thermique (12) avant de poursuivre, sur le même banc d'essai, par un test de fonctionnement du moteur (1) et, notamment, de son sens de rotation convenable ;
- puis après correction des défaillances éventuelles, on procède à la cuisson du stator (2) en soumettant le ou les bobinages (4, 5) à un courant adéquat, préférentiellement, continu.

## Patentansprüche

1. Einphasen- oder Mehrphasen-Wechselstrommotor, umfassend einen Stator (2), in dem ein Rotor (3) montiert ist, und der von wenigstens einer, einer anderen Spulung (5) und/oder einer Wärmeüberlastungssicherheit (12) zugeordneten Spulung (4) durchquert wird, wobei jedem Ende oder jeder Anschlußklemme (14, 18; 15, 19; 22, 23) der Spulung bzw. Spulungen (4, 5) und/oder der Wärmeüberlastungssicherheit (12) eine Verbindungsklemme (A, A1; B, B1; C, C1) zugeordnet ist und die einem (14; 15) der Enden der Spulungen (4, 5) entsprechenden Verbindungsklemmen (A; B), die dazu bestimmt sind, an den gemeinsamen Leiter (16) eines elektrischen Energieversorgungsnetzes (17) angeschlossen zu werden, geeignet sind, eine Verbindungsklemme (D) für den Anschluß entweder an den gemeinsamen Leiter (16) des Netzes (17) oder an eine (22) der Anschlußklemmen der Wärmeüberlastungssicherheit (12) aufzunehmen, dadurch gekennzeichnet, daß die Verbindungsklemmen (A, A1 ; B, B1; C, C1) einer Kappe (24) zugeordnet sind, die zum Schützen einer (10) der elektrischen Windungen dient, die von der Spulung bzw. Spulungen (4, 5) an den Enden (8, 9) des Stators (2) definiert werden.

2. Motor nach Anspruch 1, dadurch gekennzeichnet, daß die Kappe (24) eine ringförmige Vorderfläche (25) umfaßt, auf der die Verbindungsklemmen (A, A1; B, B1; C, C1) vorzugsweise symmetrisch zur Achse der genannten Kappe (24) verteilt sind.

3. Motor nach einem der vorgehenden Ansprüche, dadurch gekennzeichnet, daß, einerseits, die Verbindungsklemmen (A, B, C), die dazu bestimmt sind, direkt oder indirekt an das Netz (17) angeschlossen zu werden, zu einer Mehrstiftenverbindungsklemme (E1) zusammengruppiert sind und, andererseits, die Verbindungsklemmen (A, B, C) zu einer Mehrstiftenverbindungsklemme (E) zusammengruppiert sind, die geeignet ist, die Anschlußverbindungsklemme (D) aufzunehmen.

4. Motor nach irgendeinem der Ansprüche 1 und 2, dadurch gekennzeichnet, daß die Wärmeüberlastungssicherheit (12), die von einem Knopf (P) definiert ist, an dessen Anschlußklemmen zwei elektrische Kabelabschnitte angeschlossen sind, deren Enden mit den Verbindungsklemmen (C, C1) versehen sind, in einem, in einer der Kappen (24), vorzugsweise in der mit den Verbindungsklemmen (A, A1; B, B1; C, C1) versehenen Kappe (24) vorgesehenen Gehäuse (27) untergebracht ist.

5. Motor nach Anspruch 4, dadurch gekennzeichnet, daß der, der Wärmeüberlastungssicherheit (12) entsprechende Knopf (P) so im, im Bereich der Kappe (24) definierten Gehäuse (27) untergebracht ist, daß er sich gegenüber dem Endrand der von dieser Kappe (24) bedeckten elektrischen Windung befindet.

6. Motor nach irgendeinem der Ansprüche 4 und 5, dadurch gekennzeichnet, daß der Knopf (P) durch eine am Außenumkreis der Kappe (24) befindliche Öffnung (31) hindurch in das Gehäuse (27) eingeführt wird.

7. Motor nach irgendeinem der Ansprüche 4 bis 6, dadurch gekennzeichnet, daß das Gehäuse (27) eine Wand (32) einer geringen Dicke umfaßt, die es von dem, von der Kappe (24) definierten, ringförmigen Hohlraum (33) trennt, um die Wärmedetektion nicht zu stören.

8. Verfahren zum Zusammenbauen und Prüfen eines Motors nach Ansprüchen 1 bis 7, dadurch gekennzeichnet, daß nach dem Aufwickeln der Spulung bzw. Spulungen (4, 5) und deren Einführung in den Stator (2) :
- die Enden (14, 18; 15, 19) dieser Spulung bzw. Spulungen (4, 5) an die jeweiligen Verbindungsklemmen (A, A1; B, B1) einer Kappe (24) angeschlossen werden, die vorher mit einer Wärmeüberlastungssicherheit (12) versehen wurde, die selbst an Verbindungsklemmen (C, C1) im Bereich der genannten Kappe (24) angeschlossen ist;
- diese letzte auf die entsprechende, von der Spulung bzw. Spulungen (4, 5) an einem der Enden (8) des Stators (2) definierte, elektrische Windung (10) positioniert wird;
- eine Kappe auf die elektrische Windung (11) am anderen Ende des Stators (2) positioniert wird:
- jede Spulung (4, 5) und die Wärmeüberlastungssicherheit (12) einzeln geprüft werden.

9. Verfahren zum Zusammenbauen und Prüfen nach Anspruch 8, dadurch gekennzeichnet, daß vor den Probevorgängen:
- nämlich der Rotor (3) drehbar in den Stator (2) montiert wird;
- erst dann die genannten Prüfungen der Spulungen (4, 5) und der Wärmeüberlastungssicherheit (12) vorgenommen werden, bevor man auf dergleichen Probebank weitergeht mit einer Prüfung des Laufens des Motors (1) und nämlich der richtigen Drehrichtung desselben;
- anschließend, nach Korrektur der eventuellen Fehler, das Brennen des Stators (2) vorgenommen wird, indem die Spulung bzw. Spulungen (4, 5) einem geeigneten, vorzugsweise Gleichstrom ausgesetzt werden.

## Claims

1. Single-phase or multiphase alternating-current motor, including a stator (2) in which a rotor (3) is mounted and which is crossed by at least a coiling (4) associated to another coiling (5) and/or a thermal safety (12), at each of the ends or terminals (14, 18; 15, 19; 22, 23) of the coiling or coilings (4; 5) and/or of the thermal safety (12) being associated a connector (A, A1; B, B1; C, C1), the connectors (A; B) corresponding to one (14; 15) of the ends of the coilings (4; 5) and aimed at being connected to the commun lead (16) of an electric-energy supply network (17) being capable of receiving a connector (D) for the connection either to the commun lead (16) of the network (17) or to one (22) of the terminals of the thermal safety (12), characterised in that the connectors (A, A1 ; B, B1; C, C1) are associated to a cap (24) serving as a protection for one (10) of the electrical windings defined by the coiling or coilings (4; 5) at the ends (8, 9) of the stator (2).

2. Motor according to claim 1, characterised in that the cap (24) includes an annular front frace (25) on which the connectors (A, A1; B, B1; C, C1) are preferably distributed symmetrically to the axis of said cap (24).

3. Motor according to any of the preceding claims, characterised in that, on the one hand, the connectors (A, B, C) aimed at being directly or indirectly connected to the network (17) are grouped into a multipin connector (E1) and, on the other hand, the connectors (A, B, C) are grouped into a multipin connector (E) capable of receiving the connecting connector (D).

4. Motor according to any of claims 1 and 2, characterised in that the thermal safety (12), defined by a button (P) to the terminals of which are connected two electric cable length the ends of which are provided with connectors (C, C1), is accommodated in a casing (27) provided for in one of the caps (24), preferably in the cap (24) provided with the connectors (A, A1; B, B1; C, C1).

5. Motor according to claim 4, characterised in that the button (P) corresponding to the thermal safety (12) is so accommodated in the casing (27) defined at the level of the cap (24) as to be located in front of the end edge of the electrical winding (10) covered by this cap (24).

6. Motor according to any of claims 4 and 5, characterised in that the button (P) is inserted into the casing (27) through an opening (31) located at the external periphery of the cap (24).

7. Motor according to any of claims 4 and 5, characterised in that the casing (27) includes a wall (32) of a reduced thickness which separates it from the annular recess (33) defined by the cap (24), in order not to disturb the heat detection.

8. Process for assembling and testing a motor according to claims 1 to 7, characterised in that after winding up the coiling or coilings (4, 5) and their insertion into the stator (2):
- the ends (14, 18; 15, 19) of this or these coilings (4, 5) are connected to the respective connectors (A, A1: B, B1) of a cap (24) previously provided with a thermal safety (12) which is itself connected to connectors (C, C1) at the level od said cap (24);
- the latter is positioned onto the corresponding electrical winding (10) defined by the coiling or coilings (4, 5) at one of the ends (8) of the stator (2);
- a cap is positioned onto the electrical winding (11) at the other end of the stator (2);
- each coiling (4, 5) and the thermal safety (12) are individually tested.

9. Process for assembling and testing according to claim 8, characterised in that before the test operations :
- the rotor (3) is viz. rotationally mounted into the stator (2);
- only then one proceeds to said tests of the coilings (4, 5) and the thermal safety (12), before continuing, on the same test bench, by testing the operation of the motor (1) and viz. its proper direction of rotation;
- then, after correcting the eventual failures, one proceeds to the baking of the stator (2) by submitting the coiling or coilings (4, 5) to an adequate, preferably direct current.
